# EUROPEAN PATENT SPECIFICATION

(11) **EP 3 312 519 B1**
(45) Date of publication and mention of the grant of the patent: **10.03.2021**
(21) Application number: 16814581.1
(22) Date of filing: 04.05.2016
(51) Int. Cl.: F24D 19/10, F24D 10/00, F24D 3/08

(54) **HEATING AND HOT-WATER SUPPLY DEVICE APPLIED TO DISTRICT AND CENTRAL HEATING AND CONTROL METHOD THEREFOR**
HEIZUNGS- UND WARMWASSERVERSORGUNGSVORRICHTUNG ZUR ANWENDUNG AUF EINE GEBIETS- UND ZENTRALHEIZUNG SOWIE STEUERUNGSVERFAHREN DAFÜR
DISPOSITIF DE CHAUFFAGE ET D'ALIMENTATION EN EAU CHAUDE APPLIQUÉ À UN CHAUFFAGE CENTRAL ET URBAIN, ET SON PROCÉDÉ DE COMMANDE

(30) Priority: 22.06.2015 KR 20150088096
(43) Date of publication of application: 25.04.2018
(73) Proprietor: Kyungdong Navien Co., Ltd., Pyeongtaek-si, Gyeonggi-do 17704 (KR)
(72) Inventor: HEO, Chang Heoi, Seoul 08501 (KR); KIM, Jung Keom, Seoul 08501 (KR)
(74) Representative: Habermann, Hruschka & Schnabel
(86) International application number: PCT/KR2016/004693
(87) International publication number: WO 2016/208868

(56) References cited:
- EP-A2- 0 681 148
- WO-A1-2008/039065
- DE-A1- 3 123 875
- JP-A- 2015 503 724
- JP-B2- 4 239 924
- KR-A- 20090 116 457
- KR-B1- 100 997 340
- KR-Y1- 200 471 736

## Description

### [Technical Field]

The present invention relates to a heating and hot-water supply device applied to district and central heating and a control method therefor, and more particularly, to a heating and hot-water supply device which is applied to district and central heating and capable of delivering heating return water in a state in which a temperature of the heating return water is maintained to constantly be at a low temperature, and a control method therefor.

### [Background Art]

Recently, a large apartment or a mid- or large-scale building supplies heating hot-water to each household or each floor through a common pipe network by installing a common heating system for the whole apartment or building instead of an individual heating system and an individual hot-water supply system, and hot-water is supplied through a district and central heating system in which supplied water is heated to an appropriate required temperature through heat exchange between supplied hot-water and the supplied water and then the heated water is supplied to each household or each floor through the common pipe network.

An existing piping structure connected to individual households for district and central heating is configured with a four-pipe system equipped with a heating water supply tube, a heating water return tube, a heating water supply tube for hot-water, and a heating water return tube for hot-water. However, this four-pipe system can be simultaneously used for both heating and hot-water but requires a large cost in maintenance and new installation, and thus, there has recently been a tendency of using a two-pipe hot-water supply system constituted with two pipes of a heating water supply pipe and a heating water return pipe to allow heating water to be supplied to and returned from a heat source.

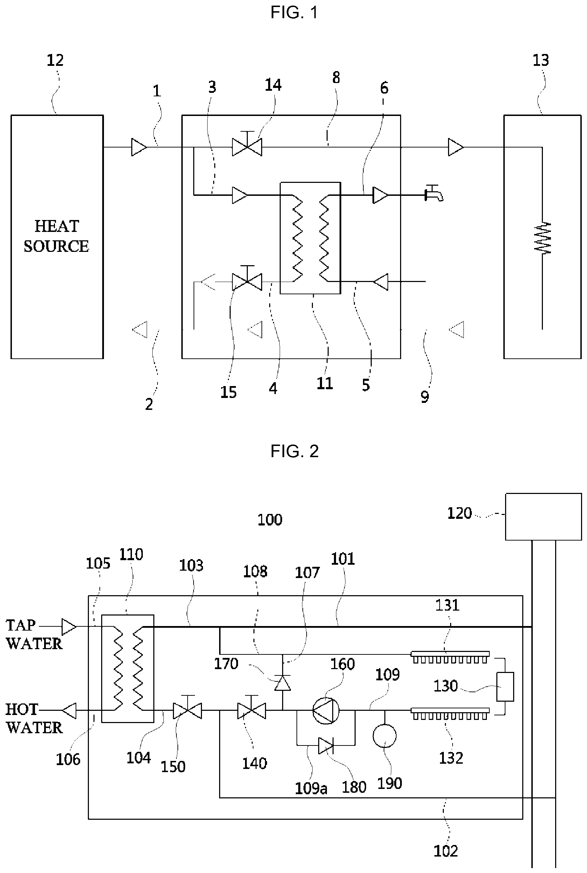

FIG. 1 illustrates a conventional two-pipe heating and hot-water supply device, and the heating and hot-water supply device shown in FIG. 1 includes a heat source 12 configured to supply heating water, a hot-water heat exchanger 11 configured to perform heat exchange between the heating water supplied from the heat source 12 and tap water to provide hot-water, a site requiring heating 13 configured to be supplied with heating using the heating water supplied from the heat source 12, a heating water supply tube 1 through which the heating water supplied from the heat source 12 flows, an inlet tube 8 for a site requiring heating connected to the heating water supply tube 1 and configured to supply the heating water to the site requiring heating 13, an inlet tube 3 for a hot-water heat exchanger connected to the heating water supply tube 1 and configured to supply the heating water to the hot-water heat exchanger 11, an outlet tube 4 for a hot-water heat exchanger configured to return the heating water which underwent heat exchange with the tap water in the hot-water heat exchanger 11 to the heat source 12, a tap water tube 5 configured to allow the tap water to flow into the hot-water heat exchanger 11, a hot-water tube 6 configured to supply the hot-water heated in the hot-water heat exchanger 11, a heating side on-off valve 14 installed at the inlet tube 8 for a site requiring heating and configured to supply the heating water to the site requiring heating 13 during heating, and a hot-water side on-off valve 15 installed at the outlet tube 4 for a hot-water heat exchanger and configured to be opened to supply the heating water to the hot-water heat exchanger 11 when the hot-water is supplied.

The heating side on-off valve 14 and the hot-water side on-off valve 15 control the supply of heating water to supply heating water and hot water with a desired temperature to each household and are valves which are simply opened and closed according to a request by a user for heating or hot-water. That is, the heating side on-off valve 14 is maximally opened when an indoor temperature is lower than a set indoor temperature, and the heating side on-off valve 14 is completely closed when the indoor temperature is higher than the set indoor temperature.

According to such a configuration, since a flow rate of the heating water cannot be finely controlled, a presently required amount of the heating water cannot be supplied such that there is a problem in that an oversupply or undersupply of the heating water occurs.

Further, since the heating water supplied from the heat source 12 is always supplied at a constant flow rate regardless of a load required in each of the households, heating water over an actually required amount can be supplied such that a loss of transmission power of a pump configured to supply the heating water from the heat source 12 may occur, the heating water is oversupplied to each of the households so that comfortable heating is impossible due to overshooting of a floor temperature, and there is a problem in that an overcharge is incurred over a heating operation time when a general flowmeter billing scheme for use of a heat source is applied to the household. On the contrary, when the heating water is insufficiently supplied, there is a problem in that heating is not properly performed.

To resolve the above-described problems, there is a method of inserting a flow rate measuring device into a heating pipe to measure a required heating load flow rate and then controlling an opening degree of a heating water flow rate control valve, but the possibility of a failure or sticking of the flow rate measuring device may be increased since a lot of floating materials and foreign materials are generally contained in an interior of the heating pipe through which heating water circulates, and it may be difficult to practically apply the flow rate measuring device to the heating pipe due to an increase of costs resulting from the application of an additional component.

As one of the above-described related arts, a heating hot-water supply device is disclosed in Korean Registered Utility Model No. 20-471736.

For example, a heating and hot-water supply device applied to district and central heating according to the preamble of claim 1 and a corresponding method according to the preamble of claim 6 are each known from WO 2008/039065 A1. Further, similar devices and methods are disclosed in e.g. EP 0 681 148 A2 and DE 31 23 875 A1, respectively.

### [Disclosure]

### [Technical Problem]

The present invention has been proposed to solve the above-described problems, and it is an objective of the present invention to provide a heating and hot-water supply device which is applied to district and central heating and capable of minimizing energy loss by decreasing a temperature of heating return water supplied to a heat source, and a control method therefor.

It is another objective of the present invention to provide a heating and hot-water supply device which is capable of supplying heating water suitable for an environment by indirectly measuring a heating load without using a separate flow rate measuring device, and a control method therefor.

[Technical Solution] The present invention proposes a heating and hot-water supply device applied to district and central heating having the features of claim 1 and a corresponding method having the features of claim 6.

A heating and hot-water supply device of the present invention, which is applied to district and central heating, includes an inlet tube for a site requiring heating configured to supply heating water supplied from a heat source to a site requiring heating an outlet tube for a site requiring heating configured to supply the heating water which undergoes heat exchange in the site requiring heating to the heat source a circulation connection tube configured to be connected between the inlet tube for a site requiring heating and the outlet tube for a site requiring heating; a circulation pump installed at a fluid circulation conduit and configured to connect the inlet tube for a site requiring heating, the site requiring heating , the outlet tube for a site requiring heating, and the circulation connection tube ; and a controller configured to make the fluid circulation conduit a closed circuit during heating and operate the circulation pump

According to the invention, a return water temperature measurement sensor is provided to measure a temperature of heating return water flowing through the outlet tube for a site requiring heating, and the controller operates the circulation pump when the measured temperature of the heating return water measured by the return water temperature measurement sensor rises to a temperature of the heating return water set by a user.

A heating side flow control valves may be provided to control a flow rate of the heating water flowing through the outlet tube for a site requiring heating, and the controller may open the heating side flow control valve to supply the heating water to the site requiring heating during heating, and may block the heating side flow control valve and operate the circulation pump when the temperature of the heating return water measured at the return water temperature measurement sensor rises to the set temperature of the heating return water.

A check valve may be provided at the circulation connection tube to allow the heating water supplied from the circulation pump to flow from the outlet tube for a site requiring heating to the inlet tube for a site requiring heating via the circulation connection tube and block a reverse flow of the heating water.

A circulation pump return tube may be provided to be connected in parallel to the outlet tube for a site requiring heating and both ends thereof may be connected to inlet and outlet sides of the circulation pump , and a check valve may be provided at the circulation pump return tube to allow the heating water supplied from the outlet side of the circulation pump to flow to the inlet side of the circulation pump via the circulation pump return tube.

The heating and hot-water supply device may further include a hot-water side flow control valve configured to control a flow rate of the heating water flowing through the outlet tube for a hot-water heat exchanger when hot-water is supplied; an inlet tube for a hot-water heat exchanger configured to supply the heating water heated in the heat source to a hot-water heat exchanger ; and an outlet tube for a hot-water heat exchanger configured to supply the heating water which undergoes heat-exchange with tap water in the hot-water heat exchanger to the heat source.

A control method for a heating and hot-water supply device of the present invention, includes a) activating a heating operation by a heating request; b) making a fluid circulation conduit connecting the inlet tube for a site requiring heating, and the site requiring heating, the outlet tube for a site requiring heating, and the circulation connection tube a closed circuit, and then operating circulation pump to circulate heating water therethrough; and c) stopping the operation of the circulation pump , making the fluid circulation conduit an open circuit, and allowing the heating return water to flow to the heat source through the outlet tube for a site requiring heating.

According to the invention, the operation a) includes measuring, by a return water temperature measurement sensor a temperature of heating return water flowing through the outlet tube for a site requiring heating, and the operation b) is performed when the temperature of the heating return water measured in the operation a) is compared with a temperature of the heating return water set by a user and the measured temperature of the heating return water rises to the set temperature of the heating return water.

The operation c) may be performed when the temperature of the heating return water measured at the return water temperature measurement sensor is lower than the set temperature of the heating return water.

A heating side flow control valve may be provided to control a flow rate of the heating water flowing through the outlet tube for a site requiring heating toward the heat source when the heating operation is performed, and opening and closing of the fluid circulation conduit may be performed according to opening and closing the heating side flow control valve .

A rise in temperature of the heating return water measured in the operation a) may be calculated, and an opening degree of the heating side flow control valve in the operation c) may be set in inverse proportion to the rise in temperature of the heating return water measured in the operation a).

A reference rise in temperature of the return water may be set by the controller in advance, the rise in temperature of the heating return water calculated in the operation a) may be compared with the reference rise of the return water in the operation c), and the opening degree of the heating side flow control valves may be increased to be greater than the opening degree in the operation a) when the rise in temperature of the heating return water calculated in the operation a) is lower than the reference rise of the return water, the opening degree of the heating side flow control valve may be decreased to be less than the opening degree in the operation a) when the rise in temperature of the heating return water measured in the operation a) is higher than the reference rise in temperature of the return water, and the opening degree of the heating side flow control valve (140) may be maintained to be the same as the opening degree in the operation a) when the rise in temperature of the heating return water measured in the operation a) is the same as the reference rise of the return water.

### [Advantageous Effects]

In accordance with the present invention, a flow rate of heating water can be precisely controlled by controlling an opening degree of a heating side flow rate control valve such that the heating water can be supplied without a loss of thermal energy when responding to various loads.

Further, energy loss can be minimized by decreasing a temperature of heating return water supplied to a heat source.

Furthermore, a heating load can be indirectly measured without using a separate flow rate measuring device, an oversupply of heating water can be prevented, and heating water suitable for an environment can be supplied such that overshooting of a floor temperature can be prevented to provide comfortable heating and costs for use of the heat source can be reduced.

### [Description of Drawings]

FIG. 1 is a diagram illustrating a conventional two-pipe heating and hot-water supply device.
FIG. 2 is a diagram illustrating a two-pipe heating and hot-water supply device according to a first embodiment of the present invention.
FIG. 3 is a diagram illustrating a heating and hot-water supply device according to a second embodiment of the present invention.
FIG. 4 is a flowchart illustrating a control method of a heating and hot-water supply device according to the present invention.
FIG. 5 is a timing chart illustrating a control process when heating.

### ** Description of Reference Numerals **

101 and 201: heating water supply tubes
102 and 202: heating water return tubes
103: inlet tube for a hot-water heat exchanger
104: outlet tube for a hot-water heat exchanger
105: tap water tube 106: hot-water tube
110: hot-water heat exchanger 120 and 220: heat sources
130 and 230: sites requiring heating
140 and 240: heating side flow control valves
150: hot-water side flow control valve
100: heating and hot-water supply device
107 and 207: circulation connection tubes
108 and 208: inlet tubes for a site requiring heating
109 and 209: outlet tubes for a site requiring heating
109a and 209a: circulation pump return tubes
160 and 260: circulation pumps
170,180,270, and 280: check valves
190 and 290: return water temperature measurement sensors
203: secondary heating water supply tube
204: secondary heating water return tube

### [Modes of the Invention]

Hereinafter, configurations and operations for preferred embodiments of the present invention will be described in detail with reference to the accompanying drawings.

### <First Embodiment>

FIG. 2 is a diagram illustrating a two-pipe heating and hot-water supply device according to the first embodiment of the present invention.

A heating and hot-water supply device 100 of the present invention supplies heating water, which is supplied from a heat source 120, to a site requiring heating 130 when heating, and the heating and hot-water supply device 100 supplies the heating water to a hot-water heat exchanger 110 when supplying hot-water.

The heat source 120 refers to a district and central heating system which supplies heating water for heating and hot-water.

A heating water supply tube 101 is provided to supply the heating water from the heat source 120 to each household, and a heating water return tube 102 is provided to supply heating return water to the heat source 120 after heat is supplied to each of the households.

The site requiring heating 130 is a place requiring heating in each of the households, and a heating water supply side distributor 131 configured to distribute the heating water to the site requiring heating 130 and a return side distributor 132 configured to deliver the heating return water which underwent heat exchange in the site requiring heating 130 to the heat source 120 are provided.

An inlet tube 108 for a site requiring heating configured to be connected between the heating water supply side distributor 131 and the heating water supply tube 101 and supply the heating water to the site requiring heating 130, and an outlet tube 109 for a site requiring heating configured to be connected between the return side distributor 132 and the heating water return tube 102 and supply the heating return water to the heat source 120 are provided.

The hot-water heat exchanger 110 is provided to supply the hot-water to a user in a household by performing heat exchange between the heating water supplied from the heat source 120 and tap water.

A tap water tube 105 into which the tap water flows; a hot-water tube 106 configured to supply hot-water, which is produced by heating the tap water flowing through the tap water tube 105, to the user; an inlet tube 103 for a hot-water heat exchanger connected to the heating water supply tube 101 and configured to supply heating water heated by the heat source 120 to the hot-water heat exchanger 110; and an outlet tube 104 for a hot-water heat exchanger connected to the heating water return tube 102 and configured to supply the heating water which underwent heat exchange with tap water in the hot-water heat exchanger 110 to the heat source 120 are connected to the hot-water heat exchanger 110.

A circulation connection tube 107 through which the heating water flows in a circulation mode, which will be described below, is connected between the inlet tube 108 for a site requiring heating and the outlet tube 109 for a site requiring heating.

The inlet tube 108 for a site requiring heating, the heating water supply side distributor 131, the site requiring heating 130, the return side distributor 132, the outlet tube 109 for a site requiring heating, and the circulation connection tube 107 constitute a fluid circulation conduit. In the circulation mode, the site requiring heating 130 absorbs heat of the heating water while the heating water circulates through the fluid circulation conduit.

A heating side flow control valve 140 configured to control a flow rate of the heating water flowing through the outlet tube 109 for a site requiring heating during heating; a circulation pump 160 configured to be operated to circulate the heating water through the fluid circulation conduit in the circulation mode; and a return water temperature measurement sensor 190 configured to measure a temperature of the heating return water flowing through the outlet tube 109 for a site requiring heating are provided at the outlet tube 109 for a site requiring heating.

A check valve 170 is provided at the circulation connection tube 107 to allow the heating water flowing due to the operation of the circulation pump 160 to flow from the outlet tube 109 for a site requiring heating to the inlet tube 108 for a site requiring heating via the circulation connection tube 107, and to block a reverse flow.

A circulation pump return tube 109a is connected in parallel to the outlet tube 109 for a site requiring heating. One end of the circulation pump return tube 109a is connected to an inlet side of the circulation pump 160 (between the circulation pump 160 and the return side distributor 132), and the other end is connected to an outlet side of the circulation pump 160 (between the circulation pump 160 and the heating side flow control valve 140).

A check valve 180 is provided at the circulation pump return tube 109a to allow heating water discharged from the outlet side of the circulation pump 160 to flow to the inlet side of the circulation pump 160 via the circulation pump return tube 109a, and to block a reverse flow. In the circulation mode, when the user blocks a valve (not shown) provided at the heating water supply side distributor 131 or the return side distributor 132 and the circulation pump 160 is operated, a load is applied to the circulation pump 160 such that durability thereof may be deteriorated. In this case, the heating water discharged from the circulation pump 160 is delivered to the inlet of the circulation pump 160 through the circulation pump return tube 109a and the check valve 180 such that a load can be prevented from being applied to the circulation pump 160.

A hot-water side flow control valve 150 is provided at the outlet tube 104 for a hot-water heat exchanger to control a flow rate of the heating water flowing through the outlet tube 104 for a hot-water heat exchanger when hot-water is supplied.

During heating, a controller closes the hot-water side flow control valve 150 and opens the heating side flow control valve 140 to perform heating. Further, when heating, the controller closes the heating side flow control valve 140 and operates the circulation pump 160 so that control for circulating the heating water through the fluid circulation conduit is performed. Meanwhile, when the hot-water is supplied, the controller opens the hot-water side flow control valve 150 and closes the heating side flow control valve 140 such that the hot-water is supplied to the user.

### <Second Embodiment>

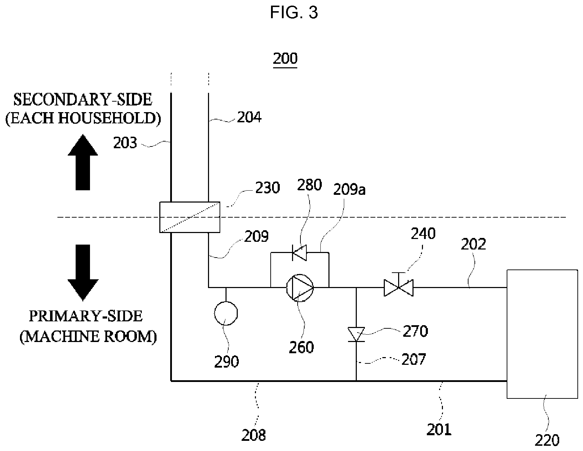

FIG. 3 is a diagram illustrating a heating and hot-water supply device according to the second embodiment of the present invention.

The first embodiment is related to a heating and hot-water supply device applied to an individual household, whereas the second embodiment is related to a heating and hot-water supply device applied to a machine room of a building such as an apartment.

A heating and hot-water supply device 200 of the second embodiment is the same as the first embodiment in terms of the inclusion of a heating water supply tube 201 and an inlet tube 208 for a site requiring heating configured to supply heating water supplied from a heat source 220 to a site requiring heating 230; an outlet tube 209 for a site requiring heating and a heating water return tube 202 configured to supply return heating water to the heat source 220 after heat is supplied to a site requiring heating 230; a circulation connection tube 207 configured to be connected between the inlet tube 208 for a site requiring heating and the outlet tube 209 for a site requiring heating; a return water temperature measurement sensor 290 provided at the outlet tube 209 for a site requiring heating and configured to measure a temperature of the heating return water; a circulation pump 260 provided at the outlet tube 209 for a site requiring heating and configured to be operated in a circulation mode; a heating side flow control valve 240 configured to control a flow rate of the heating water during heating; a circulation pump return tube 209a connected in parallel to the outlet tube 209 for a site requiring heating and both ends thereof connected to inlet and outlet sides of the circulation pump 260; a check valve 280 provided at the circulation pump return tube 209a and configured to allow the heating water supplied from the outlet of the circulation pump 260 to flow to the inlet side of the circulation pump 260 via the pump return tube 209a, and block a reverse flow; and a check valve 270 provided at the circulation connection tube 207 and configured to allow the heating water supplied from the circulation pump 260 to flow from the outlet tube 209 for a site requiring heating to the inlet tube 208 for a site requiring heating via the circulation connection tube 207, and block a reverse flow.

Here, a fluid circulation conduit is configured with the inlet tube 208 for a site requiring heating, the site requiring heating 230, the outlet tube 209 for a site requiring heating, and the circulation connection tube 207.

The site requiring heating 230 of the second embodiment is configured with a heating heat exchanger. The inlet tube 208 for a site requiring heating and the outlet tube 209 for a site requiring heating through which primary heating water flows are connected to a primary side of the heating heat exchanger 230, and a secondary heating water supply tube 203 and a secondary heating water return tube 204 through which secondary heating water for supplying heat to each household flows are connected to a secondary side of the heating heat exchanger 230. Therefore, heat exchange is performed between the primary heating water and the secondary heating water within the site requiring heating 230.

### <Control Method of the Present Invention>

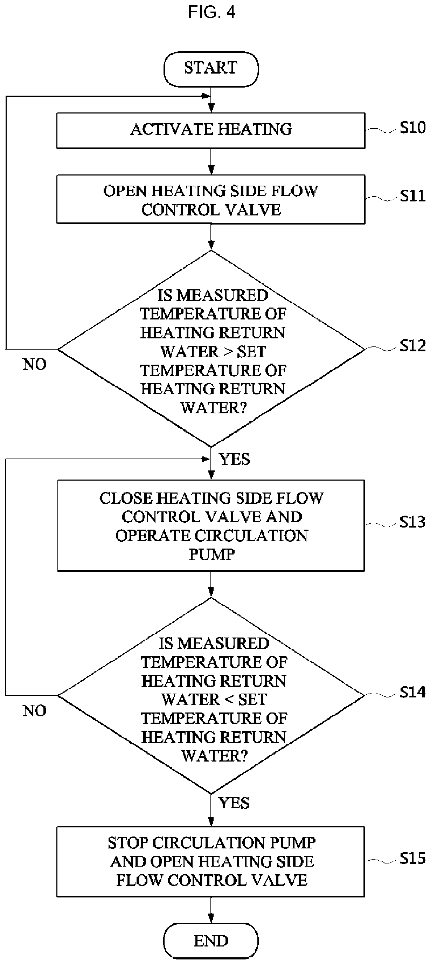

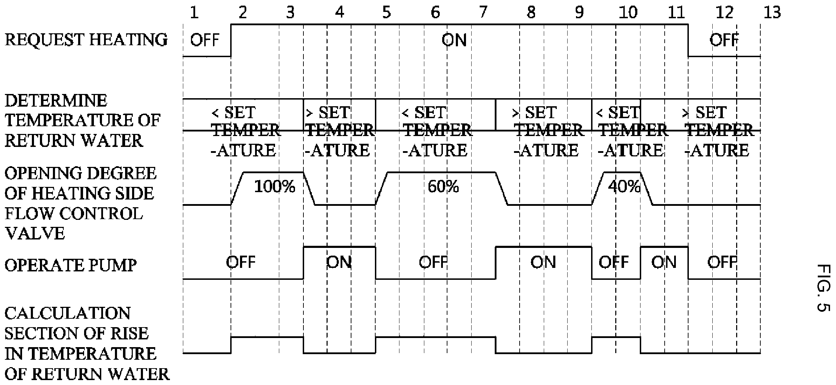

FIG. 4 is a flowchart illustrating a control method of a heating and hot-water supply device according to the present invention, and FIG. 5 is a timing chart illustrating a control process when heating.

In FIG. 5, a case in which heating is requested, which is indicated by ON, and a case in which heating is not requested, which is indicated by OFF, are shown by a first item displayed at the uppermost portion, a case in which a temperature of heating return water which is measured at the return water temperature measurement sensor 190 or 290 is compared to a set temperature of return heating water and is higher than the set temperature and a case in which the temperature of the heating return water is lower than the set temperature thereof are shown by a second item, an opening degree of the heating side flow control valve 140 or 240 as a percentage is shown by a third item, whether the circulation pump 160 or 260 is operated is shown by a fourth item, and a section in which a temperature rise of the heating return water measured at the return water temperature measurement sensor 190 or 290 is calculated in a section in which the circulation pump 160 or 260 is not operated is shown by a fifth item.

First, when a user requests heating, the controller starts the heating (S10). According to the starting of heating, the controller 100% opens the heating side flow control valve 140 or 240 (S11). Further, the controller receives a temperature of the heating return water measured at the return water temperature measurement sensor 190 or 290 and the circulation pump 160 or 260 is in a stopped state.

The controller compares the temperature of the heating return water measured at the return water temperature measurement sensor 190 or 290 with a temperature of the heating return water set by the user (S12) .

As the comparison result of the operation S12, the heating side flow control valve 140 or 240 is maintained in an opened state when the measured temperature of the heating return water is lower than the set temperature, and, a circulation mode is executed, the heating side flow control valve 140 or 240 is closed to make the fluid circulation conduit a closed circuit, and the circulation pump 160 or 260 is operated when the measured temperature of the heating return water rises to the set temperature (or the temperature of the heating return water exceeds the set temperature) (S13).

Owing to the operation of the circulation pump 160 or 260, the heating water circulates through the fluid circulation conduit configured with the outlet tube 109 or 209 for a site requiring heating, the circulation connection tube 107 or 207, the check valve 170 or 270, the inlet tube 108 or 208 for a site requiring heating, and the site requiring heating 130 or 230, and thus heat is supplied to the site requiring heating 130 or 230 while the heating water circulates through the fluid circulation conduit.

In such a circulation mode, a supply of the heating water from the heat source 120 or 220 is blocked and the heat is supplied to the site requiring heating 130 or 230 via only the heating water inside the fluid circulation conduit, and thus thermal energy of the heating water can be maximally effectively used such that an unnecessary loss of thermal energy can be prevented.

During the operation S13, the temperature of the heating return water measured at the return water temperature measurement sensor 190 or 290 is compared with the set temperature of the heating return water (S14), and the pump 160 or 260 is stopped and the heating side flow control valve 140 or 240 is opened to make the fluid circulation conduit an open circuit such that the heating return water flows to the heat source 120 or 220 when the measured temperature of the heating return water is lower than the set temperature, and otherwise, the flow control valve 140 or 240 is maintained in the closed state and the operation of the circulation pump 160 or 260 is maintained (S15).

In the operation S15, an opening degree of the heating side flow control valve 140 or 240 is determined in consideration of a load in the site requiring heating 130 or 230, and the opening degree is set to a value inversely proportional to a rise in temperature of the return water during a previous heating in the present invention.

That is, in the operations S10 and S11, the temperature of the heating return water is continuously measured and a rise in the measured temperature of the heating return water is calculated. Further, a preset reference rise in temperature of the return water may be set by the controller, and the reference rise in temperature of the return water may be set to a single absolute value.

Therefore, a load of the site requiring heating 130 or 230 is large when the rise in temperature of the return water during a previous heating, that is, the rise in temperature of the heating return water measured in the operations S10 and S11, is compared with the reference rise in temperature and the rise in temperature of the heating return water is lower than the reference rise in temperature, and thus the opening degree of the heating side flow control valve 140 or 240 is increased, the load of the site requiring heating 130 or 230 is small when the rise in temperature of the heating return water is higher than the reference rise in temperature, and thus the opening degree of the heating side flow control valve 140 or 240 is decreased, and the opening degree of the heating side flow control valve 140 or 240, which is set in the previous heating, is still maintained when the rise in temperature of the heating return water is equal to the reference rise in temperature.

For example, as shown in FIG. 5, the opening degree of the heating side flow control valve 140 or 240 in the operations S10 and S11 is 100%, and the opening degree in the operation S15 is 60%. That is, during initial heating, all heating side flow control valve 140 or 240 are 100% opened, and since a load of a site requiring heating 130 or 230 are small as a calculation result of the rise in measured temperature of the heating return water, the rise in measured temperature of the heating return water is greater than the reference rise in temperature of the return water. Therefore, the opening degree of each of the heating side flow control valve 140 or 240 is reduced to 60% of that of the heating side flow control valve 140 or 240 in inverse proportion to the rise in measured temperature of the heating return water in the operations S10 and S11 in the previous heating.

As described above, the opening degree of the heating side flow control valve 140 or 240 is reduced such that the temperature of the heating return water is lowered, and energy loss can be reduced.

Further, heating water suitable for an environment can be supplied by indirectly measuring a heating load without a separate flow rate measuring device, and a supply of unnecessary heating water is reduced such that energy loss can be prevented.

This series of control procedures is repeated until a room temperature reaches the set indoor temperature or there is no heating request.

## Claims

1. A heating and hot-water supply device applied to district and central heating, the device comprising:
a heat source,
a site requiring heating,
an inlet tube (108 or 208) for said site requiring heating configured to supply heating water supplied from said heat source (120 or 220) to said site requiring heating (130 or 230) ;
an outlet tube (109 or 209) for said site requiring heating configured to supply the heating water which undergoes heat exchange in the site requiring heating (130 or 230) to the heat source (120 or 220);
a circulation connection tube (107 or 207) configured to be connected between the inlet tube (108 or 208) for said site requiring heating and the outlet tube (109 or 209) for said site requiring heating;
a circulation pump (160 or 260) installed at a fluid circulation conduit and configured to connect the inlet tube (108 or 208) for said site requiring heating, the site requiring heating (130 or 230), the outlet tube (109 or 209) for said site requiring heating, and the circulation connection tube (107 or 207); and
a controller configured to make the fluid circulation conduit a closed circuit during heating and operate the circulation pump (160 or 260);
**characterized in that**
a return water temperature measurement sensor (190 or 290) is provided to measure a temperature of heating return water flowing through the outlet tube (109 or 209) for said site requiring heating, and
the controller operates the circulation pump (160 or 260) when the measured temperature of the heating return water measured by the return water temperature measurement sensor (190 or 290) rises to a temperature of the heating return water set by a user.

2. The device of claim 1, wherein:
a heating side flow control valve (140 or 240) is provided to control a flow rate of the heating water flowing through the outlet tube (109 or 209) for said site requiring heating,
the controller opens the heating side flow control valve (140 or 240) to supply the heating water to the site requiring heating (130 or 230) during heating, and
the controller blocks the heating side flow control valve (140 or 240) and operates the circulation pump (160 or 260) when the temperature of the heating return water measured at the return water temperature measurement sensor (190 or 290) rises to the set temperature of the heating return water.

3. The device of claim 2, wherein a first check valve (170 or 270) is provided at the circulation connection tube (107 or 207) to allow the heating water supplied from the circulation pump (160 or 260) to flow from the outlet tube (109 or 209) for said site requiring heating to the inlet tube (108 or 208) for said site requiring heating via the circulation connection tube (107 or 207), and block a reverse flow of the heating water.

4. The device of claim 2, wherein:
a circulation pump return tube (109a or 209a) is provided to be connected in parallel to the outlet tube (109 or 209) for said site requiring heating and both ends thereof are connected to inlet and outlet sides of the circulation pump (160 or 260), and
a second check valve (180 or 280) is provided at the circulation pump return tube (109a or 209a) to allow the heating water supplied from the outlet side of the circulation pump (160 or 260) to flow to the inlet side of the circulation pump (160 or 260) via the circulation pump return tube (109a or 209a).

5. The device of claim 2, further comprising:
a hot-water heat exchanger (110);
a hot-water side flow control valve (150) configured to control a flow rate of the heating water flowing through the outlet tube (104) for said hot-water heat exchanger (110) when hot-water is supplied;
an inlet tube (103) for said hot-water heat exchanger (110) configured to supply the heating water heated in the heat source (120) to said hot-water heat exchanger (110); and
an outlet tube (104) for said hot-water heat exchanger (110) configured to supply the heating water which undergoes heat-exchange with tap water in the hot-water heat exchanger (110) to the heat source (120).

6. A control method for the heating and hot-water supply device according to claim 1, the method comprising:
a) activating a heating operation by a heating request;
b) making a fluid circulation conduit connecting the inlet tube (108 or 208) for said site requiring heating, the site requiring heating (130 or 230), the outlet tube (109 or 209) for said site requiring heating, and the circulation connection tube (107 or 207) a closed circuit, and then operating the circulation pump (160 or 260) to circulate heating water therethrough; and
c) stopping the operation of the circulation pump (160 or 260), making the fluid circulation conduit an open circuit, and allowing heating return water to flow to the heat source (120 or 220) through the outlet tube (109 or 209) for a site requiring heating;
**characterized in that**
the operation a) includes measuring, by a return water temperature measurement sensor (190 or 290), a temperature of heating return water flowing through the outlet tube (109 or 209) for said site requiring heating, and
the operation b) is performed when the temperature of the heating return water measured in the operation a) is compared with a temperature of the heating return water set by a user and the measured temperature of the heating return water rises to the set temperature of the heating return water.

7. The method of claim 6, wherein the operation c) is performed when the temperature of the heating return water measured at the return water temperature measurement sensor (190 or 290) is lower than the set temperature of the heating return water.

8. The method of claim 7, wherein:
a heating side flow control valve (140 or 240) is provided to control a flow rate of the heating water flowing through the outlet tube (109 or 209) for said site requiring heating toward the heat source (120 or 220) when the heating operation is performed, and
opening and closing of the fluid circulation conduit is performed according to opening and closing the heating side flow control valve (140 or 240).

9. The method of claim 8, wherein:
a rise in temperature of the heating return water measured in the operation a) is calculated, and
an opening degree of the heating side flow control valve (140 or 240) in the operation c) is set in inverse proportion to the rise in temperature of the heating return water measured in the operation a).

10. The method of claim 9, wherein:
a reference rise in temperature of the return water is set by the controller in advance,
the rise in temperature of the heating return water calculated in the operation a) is compared with the reference rise of the return water in the operation c), and the opening degree of the heating side flow control valve (140 or 240) is increased to be greater than the opening degree in the operation a) when the rise in temperature of the heating return water calculated in the operation a) is lower than the reference rise of the return water,
the opening degree of the heating side flow control valve (140) is decreased to be less than the opening degree in the operation a) when the rise in temperature of the heating return water measured in the operation a) is higher than the reference rise in temperature of the return water, and
the opening degree of the heating side flow control valve (140) is maintained to be the same as the opening degree in the operation a) when the rise in temperature of the heating return water measured in the operation a) is the same as the reference rise of the return water.

## Patentansprüche

1. Heizungs- und Warmwasserversorgungsvorrichtung, die für Fern- und Zentralheizungen verwendet wird, wobei die Vorrichtung aufweist:
eine Wärmequelle,
einen zu beheizenden Ort,
ein Einlassrohr (108 oder 208) für den zu beheizenden Ort, das so konfiguriert ist, dass es das von der Wärmequelle (120 oder 220) gelieferte Heizwasser den zu beheizenden Ort (130 oder 230) zuführt;
ein Auslassrohr (109 oder 209) für den zu beheizenden Ort, das so gestaltet ist, dass es das Heizwasser, das in dem zu beheizenden Ort (130 oder 230) einen Wärmeaustausch erfährt, der Wärmequelle (120 oder 220) zuführt;
ein Umwälzverbindungsrohr (107 oder 207), das so konfiguriert ist, dass es zwischen dem Einlassrohr (108 oder 208) für den zu beheizenden Ort und dem Auslassrohr (109 oder 209) für den zu beheizenden Ort angeschlossen wird;
eine Umwälzpumpe (160 oder 260), die an einer Fluidzirkulationsleitung installiert und so konfiguriert ist, dass sie das Einlassrohr (108 oder 208) für den zu beheizenden Ort, den zu beheizenden Ort (130 oder 230), das Auslassrohr (109 oder 209) für den zu beheizenden Ort und das Umwälzverbindungsrohr (107 oder 207) verbindet; und
eine Steuerung, die so konfiguriert ist, dass sie die Fluidzirkulationsleitung während des Heizens zu einem geschlossenen Kreislauf macht und die Umwälzpumpe (160 oder 260) betreibt;
**dadurch gekennzeichnet, dass**
ein Rücklaufwassertemperaturmesssensor (190 oder 290) vorgesehen ist, um eine Temperatur des durch das Auslassrohr (109 oder 209) für den zu beheizenden Ort fließenden Heizungsrücklaufwassers zu messen, und
die Steuerung die Umwälzpumpe (160 oder 260) betreibt, wenn die von dem Rücklaufwassertemperaturmesssensor (190 oder 290) gemessene Temperatur des Heizungsrücklaufwassers auf eine von einem Benutzer eingestellte Temperatur des Heizungsrücklaufwassers ansteigt.

2. Vorrichtung nach Anspruch 1, bei der:
ein heizungsseitiges Durchflussregelventil (140 oder 240) vorgesehen ist, um eine Durchflussmenge des durch das Auslassrohr (109 oder 209) fließenden Heizwassers für den zu beheizenden Ort zu regeln,
die Steuerung das heizungsseitige Durchflussregelventil (140 oder 240) öffnet, um das Heizwasser während des Heizens an den zu beheizenden Ort (130 oder 230) zu liefern, und
die Steuerung das heizungsseitige Durchflussregelventil (140 bzw. 240) sperrt und die Umwälzpumpe (160 bzw. 260) betreibt, wenn die am Rücklaufwassertemperaturmesssensor (190 bzw. 290) gemessene Temperatur des Heizungsrücklaufwassers auf die eingestellte Temperatur des Heizungsrücklaufwassers ansteigt.

3. Vorrichtung nach Anspruch 2, bei der ein erstes Rückschlagventil (170 bzw. 270) am Umwälzverbindungsrohr (107 bzw. 207) vorgesehen ist, um das von der Umwälzpumpe (160 bzw. 260) gelieferte Heizwasser vom Auslassrohr (109 bzw. 209) für den zu beheizenden Ort zum Einlassrohr (108 bzw. 208) für den zu beheizenden Ort über das Umwälzverbindungsrohr (107 bzw. 207) fließen zu lassen und einen Rückfluss des Heizwassers zu sperren.

4. Vorrichtung nach Anspruch 2, bei der:
ein Umwälzpumpen-Rücklaufrohr (109a oder 209a) vorgesehen ist, das parallel zu dem Auslassrohr (109 oder 209) für den zu beheizenden Ort angeschlossen ist und dessen beide Enden mit der Einlass- und Auslassseite der Umwälzpumpe (160 oder 260) verbunden sind, und
ein zweites Rückschlagventil (180 oder 280) am Umwälzpumpen-Rücklaufrohr (109a oder 209a) vorgesehen ist, um das von der Auslassseite der Umwälzpumpe (160 oder 260) zugeführte Heizwasser über das Umwälzpumpen-Rücklaufrohr (109a oder 209a) zur Einlassseite der Umwälzpumpe (160 oder 260) fließen zu lassen.

5. Vorrichtung nach Anspruch 2, des Weiteren aufweisend:
einen Warmwasser-Wärmetauscher (110);
ein warmwasserseitiges Durchflussregelventil (150), das so konfiguriert ist, dass es eine Durchflussrate des durch das Auslassrohr (104) für den Warmwasser-Wärmetauscher (110) fließenden Heizwassers regelt, wenn Warmwasser zugeführt wird;
ein Einlassrohr (103) für den Warmwasser-Wärmetauscher (110), das so konfiguriert ist, dass es das in der Wärmequelle (120) erwärmte Heizwasser dem Warmwasser-Wärmetauscher (110) zuführt; und
ein Auslassrohr (104) für den Warmwasser-Wärmetauscher (110), das so konfiguriert ist, dass es das Heizwasser, das einen Wärmeaustausch mit Leitungswasser in dem Warmwasser-Wärmetauscher (110) erfährt, der Wärmequelle (120) zuführt.

6. Steuerungsverfahren für die Heizungs- und Warmwasserversorgungsvorrichtung nach Anspruch 1, wobei das Verfahren aufweist:
a) Aktivieren eines Heizbetriebs durch eine Heizanforderung;
b) Herstellen einer Fluidzirkulationsleitung, die das Einlassrohr (108 oder 208) für den zu beheizenden Ort, den zu beheizenden Ort (130 oder 230), das Auslassrohr (109 oder 209) für den zu beheizenden Ort und das Umwälzverbindungsrohr (107 oder 207) zu einem geschlossenen Kreislauf verbindet, und anschließendes Betreiben der Umwälzpumpe (160 oder 260), um Heizwasser durch diese hindurch zirkulieren zu lassen; und
c) Anhalten des Betriebs der Umwälzpumpe (160 oder 260), wodurch die Fluidzirkulationsleitung zu einem offenen Kreislauf wird und Heizungsrücklaufwasser zur Wärmequelle (120 oder 220) durch das Auslassrohr (109 oder 209) für einen zu beheizenden Ort fließen kann;
**dadurch gekennzeichnet, dass**
der Vorgang a) das Messen einer Temperatur des Heizungsrücklaufwassers, das durch das Auslassrohr (109 oder 209) für den zu beheizenden Ort fließt, durch einen Rücklaufwassertemperaturmesssensor (190 oder 290) umfasst, und
der Vorgang b) durchgeführt wird, wenn die im Vorgang a) gemessene Temperatur des Heizungsrücklaufwassers mit einer von einem Benutzer eingestellten Temperatur des Heizungsrücklaufwassers verglichen wird und die gemessene Temperatur des Heizungsrücklaufwassers auf die eingestellte Temperatur des Heizungsrücklaufwassers ansteigt.

7. Verfahren nach Anspruch 6, bei dem der Vorgang c) durchgeführt wird, wenn die am Rücklaufwassertemperaturmesssensor (190 oder 290) gemessene Temperatur des Heizungsrücklaufwassers niedriger ist als die eingestellte Temperatur des Heizungsrücklaufwassers.

8. Verfahren nach Anspruch 7, bei dem:
ein heizungsseitiges Durchflussregelventil (140 oder 240) vorgesehen ist, um eine Durchflussrate des durch das Auslassrohr (109 oder 209) für den zu beheizenden Ort fließenden Heizwassers in Richtung der Wärmequelle (120 oder 220) zu steuern, wenn der Heizvorgang durchgeführt wird, und
das Öffnen und Schließen der Fluidzirkulationsleitung entsprechend dem Öffnen und Schließen des heizungsseitigen Durchflussregelventils (140 oder 240) durchgeführt wird.

9. Verfahren nach Anspruch 8, bei dem:
ein im Vorgang a) gemessener Temperaturanstieg des Heizungsrücklaufwassers berechnet wird, und
ein Öffnungsgrad des heizungsseitigen Durchflussregelventils (140 oder 240) im Vorgang c) umgekehrt proportional zu dem im Vorgang a) gemessenen Temperaturanstieg des Heizungsrücklaufwassers eingestellt wird.

10. Verfahren nach Anspruch 9, bei dem:
ein Referenzanstieg der Temperatur des Rücklaufwassers durch die Steuerung vorab eingestellt wird,
der im Vorgang a) berechnete Temperaturanstieg des Heizungsrücklaufwassers mit dem Referenzanstieg des Rücklaufwassers im Vorgang c) verglichen wird und der Öffnungsgrad des heizungsseitigen Durchflussregelventils (140 oder 240) erhöht wird, so dass er größer ist als der Öffnungsgrad im Vorgang a), wenn der im Vorgang a) berechnete Temperaturanstieg des Heizungsrücklaufwassers niedriger ist als der Referenzanstieg des Rücklaufwassers,
der Öffnungsgrad des heizungsseitigen Durchflussregelventils (140) verringert wird, so dass er kleiner ist als der Öffnungsgrad im Vorgang a), wenn der im Vorgang a) gemessene Temperaturanstieg des Heizungsrücklaufwassers größer ist als der Referenzanstieg der Temperatur des Rücklaufwassers, und
der Öffnungsgrad des heizungsseitigen Durchflussregelventils (140) gleich dem Öffnungsgrad im Vorgang a) gehalten wird, wenn der im Vorgang a) gemessene Temperaturanstieg des Heizungsrücklaufwassers gleich dem Referenzanstieg des Rücklaufwassers ist.

## Revendications

1. Dispositif de chauffage et d'alimentation en eau chaude appliqué à un chauffage urbain et central, le dispositif comprenant :
une source de chaleur,
un site nécessitant un chauffage,
un tube d'entrée (108 ou 208) pour ledit site nécessitant un chauffage configuré pour fournir de l'eau de chauffage fournie par ladite source de chaleur (120 ou 220) audit site (130 ou 230) nécessitant un chauffage ;
un tube de sortie (109 ou 209) pour ledit site nécessitant un chauffage configuré pour fournir l'eau de chauffage qui subit un échange de chaleur dans le site (130 ou 230) nécessitant un chauffage à la source de chaleur (120 ou 220) ;
un tube de connexion de circulation (107 ou 207) configuré pour être connecté entre le tube d'entrée (108 ou 208) pour ledit site (130 ou 230) nécessitant un chauffage et le tube de sortie (109 ou 209) pour ledit site nécessitant un chauffage ;
une pompe de circulation (160 ou 260) installée au niveau d'un conduit de circulation de fluide et configurée pour connecter le tube d'entrée (108 ou 208) dudit site nécessitant un chauffage, le site (130 ou 230) nécessitant un chauffage, le tube de sortie (109 ou 209) pour ledit site nécessitant un chauffage, et le tube de connexion de circulation (107 ou 207) ; et
un dispositif de commande configuré pour amener le conduit de circulation de fluide en un circuit fermé pendant et actionner la pompe de circulation (160 ou 260) ;
**caractérisé en ce que**
un capteur de mesure de la température d'eau de retour (190 ou 290) est prévu pour mesurer une température d'eau de retour de chauffage circulant à travers le tube de sortie (109 ou 209) pour ledit site nécessitant un chauffage, et
le dispositif de commande fait fonctionner la pompe de circulation (160 ou 260) lorsque la température mesurée de l'eau de retour de chauffage mesurée par le capteur de mesure de température d'eau de retour (190 ou 290) s'élève jusqu'à une température de l'eau de retour de chauffage réglée par un utilisateur.

2. Dispositif selon la revendication 1, dans lequel :
une vanne de commande d'écoulement côté chauffage (140 ou 240) est prévue pour commander un débit d'écoulement de l'eau de chauffage s'écoulant à travers le tube de sortie (109 ou 209) pour ledit site nécessitant un chauffage,
le dispositif de commande ouvre la vanne de commande d'écoulement côté chauffage (140 ou 240) pour fournir l'eau de chauffage au site (130 ou 230) nécessitant un chauffage pendant un chauffage, et
le dispositif de commande bloque la vanne de commande d'écoulement côté chauffage (140 ou 240) et fait fonctionner la pompe de circulation (160 ou 260) lorsque la température de l'eau de retour de chauffage mesurée au niveau du capteur de mesure de température d'eau de retour (190 ou 290) s'élève jusqu'à la température réglée de l'eau de retour de chauffage.

3. Dispositif selon la revendication 2, dans lequel un premier clapet anti-retour (170 ou 270) est prévu au niveau du tube de connexion de circulation (107 ou 207) pour permettre à l'eau de chauffage fournie par la pompe de circulation (160 ou 260) de s'écouler depuis le tube de sortie (109 ou 209) pour ledit site nécessitant un chauffage vers le tube d'entrée (108 ou 208) pour ledit site nécessitant un chauffage via le tube de connexion de circulation (107 ou 207), et bloquer un écoulement inverse de l'eau de chauffage.

4. Dispositif selon la revendication 2, dans lequel :
un tube de retour de pompe de circulation (109a ou 209a) est prévu pour être connecté en parallèle au tube de sortie (109 ou 209) pour ledit site nécessitant un chauffage et ses deux extrémités sont connectées aux côtés d'entrée et de sortie de la pompe de circulation (160 ou 260)), et
un second clapet anti-retour (180 ou 280) est prévu au niveau du tube de retour de pompe de circulation (109a ou 209a) pour permettre à l'eau de chauffage fournie depuis le côté de sortie de la pompe de circulation (160 ou 260) de s'écouler vers le côté d'entrée de la pompe de circulation (160 ou 260) via le tube de retour de pompe de circulation (109a ou 209a).

5. Dispositif selon la revendication 2, comprenant en outre :
un échangeur de chaleur à eau chaude (110) ;
une vanne de commande d'écoulement côté eau chaude (150) configurée pour commander un débit d'écoulement de l'eau de chauffage s'écoulant à travers le tube de sortie (104) pour ledit échangeur de chaleur à eau chaude (110) lorsque de l'eau chaude est fournie ;
un tube d'entrée (103) pour ledit échangeur de chaleur à eau chaude (110) configuré pour fournir l'eau de chauffage chauffée dans la source de chaleur (120) audit échangeur de chaleur à eau chaude (110) ; et
un tube de sortie (104) pour ledit échangeur de chaleur à eau chaude (110) configuré pour fournir l'eau de chauffage qui subit un échange de chaleur avec l'eau du robinet dans l'échangeur de chaleur à eau chaude (110) à la source de chaleur (120).

6. Procédé de commande pour le dispositif de chauffage et d'alimentation en eau chaude selon la revendication 1, le procédé comprenant les étapes consistant à :
a) activer une opération de chauffage par une demande de chauffage ;
b) réaliser un conduit de circulation de fluide connectant le tube d'entrée (108 ou 208) pour ledit site nécessitant un chauffage, le site (130 ou 230) nécessitant un chauffage, le tube de sortie (109 ou 209) pour ledit site nécessitant un chauffage, et le tube de connexion de circulation (107 ou 207) en un circuit fermé, puis faire fonctionner la pompe de circulation (160 ou 260) pour faire circuler de l'eau de chauffage à travers celle-ci ; et
c) arrêter le fonctionnement de la pompe de circulation (160 ou 260), amener le conduit de circulation de fluide en un circuit ouvert, et permettre à de l'eau de retour de chauffage de s'écouler vers la source de chaleur (120 ou 220) à travers le tube de sortie (109 ou 209) pour un site nécessitant un chauffage;
**caractérisée en ce que**
l'opération a) comprend une mesure, par un capteur de mesure de température d'eau de retour (190 ou 290), d'une température d'eau de retour de chauffage circulant à travers le tube de sortie (109 ou 209) pour ledit site nécessitant un chauffage, et l'opération b) est effectuée lorsque la température de l'eau de retour de chauffage mesurée lors de l'opération a) est comparée à une température de l'eau de retour de chauffage réglée par un utilisateur et la température mesurée de l'eau de retour de chauffage s'élève jusqu'à la température réglée de l'eau de retour de chauffage.

7. Procédé selon la revendication 6, dans lequel l'opération c) est effectuée lorsque la température de l'eau de retour de chauffage mesurée au niveau du capteur de mesure de température d'eau de retour (190 ou 290) est inférieure à la température réglée de l'eau de retour de chauffage.

8. Procédé selon la revendication 7, dans lequel :
une vanne de commande d'écoulement côté chauffage (140 ou 240) est prévue pour commander un débit d'écoulement de l'eau de chauffage s'écoulant à travers le tube de sortie (109 ou 209) pour ledit site nécessitant un chauffage vers la source de chaleur (120 ou 220) lorsque l'opération de chauffage est effectuée, et
l'ouverture et la fermeture du conduit de circulation de fluide sont effectuées en fonction de l'ouverture et de la fermeture de la vanne de commande d'écoulement côté chauffage (140 ou 240).

9. Procédé selon la revendication 8, dans lequel :
une élévation de température de l'eau de retour de chauffage mesurée lors de l'opération a) est calculée, et
un degré d'ouverture de la vanne de commande d'écoulement côté chauffage (140 ou 240) dans l'opération c) est réglé de manière inversement proportionnelle à l'élévation de température de l'eau de retour de chauffage mesurée lors de l'opération a).

10. Procédé selon la revendication 9, dans lequel :
une élévation de température de référence de l'eau de retour est réglée à l'avance par le dispositif de commande,
l'élévation de température de l'eau de retour de chauffage calculée dans l'opération a) est comparée à l'augmentation de référence de l'eau de retour dans l'opération c), et le degré d'ouverture de la vanne de commande d'écoulement côté chauffage (140 ou 240) est augmenté pour être supérieur au degré d'ouverture de l'opération a) lorsque l'élévation de température de l'eau de retour de chauffage calculée lors de l'opération a) est inférieure à l'élévation de référence de l'eau de retour,
le degré d'ouverture de la vanne de commande d'écoulement côté chauffage (140) est diminué pour être inférieur au degré d'ouverture lors de l'opération a) lorsque l'élévation de température de l'eau de retour de chauffage mesurée dans l'opération a) est supérieure à l'élévation de température de référence de l'eau de retour, et
le degré d'ouverture de la vanne de commande d'écoulement côté chauffage (140) est maintenu pour être identique au degré d'ouverture lors de l'opération a) lorsque l'élévation de température de l'eau de retour de chauffage mesurée lors de l'opération a) est la même que l'élévation de référence de l'eau de retour.
